# EUROPEAN PATENT APPLICATION

(11) **EP 2 575 097 A1**
(43) Date of publication of application: **03.04.2013**
(21) Application number: 11183532.8
(22) Date of filing: 30.09.2011
(51) Int. Cl.: G06Q 20/00

(54) **Payment processing system including point-of-sale device with a unique identifier and associated methods**

(71) Applicant: Research In Motion Limited, Waterloo, ON N2L 3W8 (CA)
(72) Inventor: LAMBA, Jaspreet, Waterloo, Ontario N2L 3W8 (CA)
(74) Representative: Bryn-Jacobsen, Caelia

(57) **Abstract**

A wireless communications device (24) is for communication with a point of sale (POS) device (12) via a secure intermediary (18), the secure intermediary associating a unique POS identifier with the POS device, the POS device having a merchant account associated therewith. The wireless communications device (24) includes a receiver module (26), and a memory (30) configured to store account access information for a payment account. A processor (31) is coupled to the receiver module and the memory, and is configured to determine the unique POS identifier using the receiver module. The processor is also configured to send the account access information to the POS device using via the secure intermediary and using the unique POS identifier, so that the POS device in turn causes a transfer of funds from the payment account to the merchant account.

## Description

### Technical Field

The present disclosure relates to the field of mobile wireless communications devices, and, more particularly, to mobile wireless communications devices for communicating with payment processing systems.

### Background

Mobile wireless communications devices have become pervasive in today's society, and are carried daily by a large number of individuals. Part of the reason for their popularity is that such mobile wireless communications devices are now capable of more than simple voice communications. Indeed, some mobile wireless communications devices are now capable of acting as a personal digital assistant, performing functions such as keeping a calendar of daily appointments and maintaining a large address book. In addition, some mobile wireless communications devices have connectivity with the Internet via their cellular connection, and are thus capable of e-mail delivery and web browsing.

In addition to carrying a mobile wireless communications device, many individuals also carry a wallet containing numerous cards, such as driver's licenses, credit cards, bank cards, discount cards, rewards cards, and membership cards. This wide variety of cards can lead to a wallet being undesirably thick, taking up more space than desired in a pocket or a purse. One way in which to reduce this burden is to design mobile wireless communications devices that can carry the information contained in such cards (such as account access information), and payment processing systems that can access the information in those mobile wireless communications devices in order to process transactions.

While such mobile wireless communications devices have been successful at reducing the number of cards an individual carries, some users may be concerned about the security of using their mobile wireless communications devices with such payment processing systems. Consequently, the development of new payment processing systems having increased security is desirable.

### Brief Description of the Drawings

FIG. 1 is a schematic block diagram of a payment processing system in accordance with the present disclosure.

FIG. 2 is a schematic block diagram of another embodiment of a payment processing system in accordance with the present disclosure.

FIG. 3 is a schematic block diagram of a further embodiment of a payment processing system in accordance with the present disclosure.

FIG. 4 is a flowchart of a method of operating the mobile wireless communications device of the present disclosure.

FIG. 5 is a flowchart of a method of operating the secure intermediary of the present disclosure.

FIG. 6 is a flowchart of a method of operating the POS device of the present disclosure.

FIG. 7 is a block diagram of the embodiment of the payment processing system of FIG. 1 showing transmission of data between the components thereof.

FIG. 8 is a block diagram of the embodiment of the payment processing system of FIG. 2 showing transmission of data between the components thereof.

FIG. 9 is a block diagram of the embodiment of the payment processing system of FIG. 3 showing transmission of data between the components thereof.

FIG. 10 is a schematic block diagram illustrating example components of a mobile wireless communications device that may be used with the payment processing systems of FIGS. 1, 2, and 3.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime and multiple prime notation are used to indicate similar elements or steps in alternative embodiments. Generally speaking, a payment processor system may include a mobile wireless communications device, a point-of-sale (POS) device, a secure intermediary to facilitate communications between the mobile wireless communications device and the POS device, and a transaction server.

The wireless communications device is therefore for communication with a point of sale (POS) device via a secure intermediary, the secure intermediary associating a unique POS identifier with the POS device, the POS device having a merchant account associated therewith. The wireless communications device may include a receiver module, and a memory configured to store account access information for a payment account. A processor may be coupled to the receiver module and the memory. The processor may be configured to determine the unique POS identifier using the receiver module, and send the account access information to the POS device via the secure intermediary and using the unique POS identifier, so that the POS device in turn causes a transfer of funds from the payment account to the merchant account.

The receiver module may comprise an image sensor, and the unique POS identifier may be encoded in a coded image. The processor may determine the unique POS identifier by capturing the coded image using the image sensor and decoding the coded image to thereby determine the unique POS identifier.

In some applications, the processor may be configured to encrypt the account access information before sending the account access information to the POS device, which in turn sends the account access information to a transaction server to thereby cause the transfer of funds. The memory may be configured to store account access information for a plurality of payment accounts, and the processor may be configured to permit selection of the payment account via an input device.

Additionally, the processor may be configured to receive a payment confirmation from the POS device via the secure intermediary, and may display the payment confirmation on a display. The processor may be configured to receive a payment verification request from the POS device via the secure intermediary, and may also be configured to send a payment verification to the POS device via the secure intermediary using the unique POS address.

A method aspect is directed to a method of operating the wireless communications device. The method is therefore a method of operating a wireless communications device for communication with a point of sale (POS) device via a secure intermediary, the secure intermediary associating a unique POS identifier with the POS device, the POS device having a merchant account associated therewith, the wireless communications device comprising a receiver module, a memory configured to store account access information for a payment account, and a processor coupled to the receiver module and the memory. The method includes determining the unique POS identifier using the receiver module in cooperation with the processor. The method further includes sending the account access information to the POS device via the secure intermediary and using the unique POS identifier, so that the POS device in turn causes a transfer of funds from the payment account to the merchant account, using the processor.

The POS device therefore comprises a POS device for communication with a secure intermediary, the secure intermediary associating a unique POS identifier with the POS device, the POS device having a merchant account associated therewith. The POS device may include a processor configured to receive, via the secure intermediary and based upon the unique POS identifier, account access information for a payment account sent to the secure intermediary by a wireless communications device. The processor may be further configured to send the account access information together with transaction information to a transaction server to thereby cause a transfer of funds from the payment account to the merchant account.

The POS device may include a display, and the processor may be configured to generate a coded image from the unique POS identifier. The processor may also be configured to display the coded image on the display so that the wireless communications device captures the coded image using an image sensor.

Alternatively, a housing may carry the processor. A substrate may be carried by the housing and have a coded image thereon representing the unique POS identifier so that the wireless communications device captures the coded image using an image sensor.

The processor may be configured to send the account access information and the transaction information to the transaction server via the secure intermediary and using a unique transaction server identifier. In addition, the processor may be configured to send the account access information and the transaction information to the transaction server via a virtual private network (VPN).

A method aspect is therefore directed to a method of operating point of sale (POS) device for communication with a secure intermediary, the secure intermediary associating a unique POS identifier with the POS device, the POS device having a merchant account associated therewith. The method may include receiving, via the secure intermediary and based upon the unique POS identifier, account access information for a payment account sent to the secure intermediary by a wireless communications device, using a processor. The method may further include sending the account access information together with transaction information to a transaction server to thereby cause a transfer of funds from the payment account to the merchant account, using the processor.

The secure intermediary is therefore a server configured to operate as a secure intermediary between a point of sale (POS) device and a wireless communications device, the secure intermediary associating a unique POS identifier with the POS device and a unique wireless communications device identifier with the wireless communications device. The server comprises a network interface, and a processor coupled to the network interface. The processor may be configured to receive the unique POS identifier and account access information from the wireless device, and send the account access information to the POS device using the unique POS identifier, so that the POS device causes a transfer of funds from a payment account associated with the account access information to a merchant account associated with the POS device.

The processor may be configured to receive a transaction confirmation from the POS device, and send the transaction confirmation to the wireless communications device using the unique wireless communications device identifier. The processor may be configured to receive a transaction verification request from the POS device. In addition, the processor may be further configured to send the transaction verification request to the wireless communications device using the unique wireless communications device identifier, and to receive a transaction verification from the wireless communications device. The processor may also be configured to send the transaction verification to the POS device using the unique POS identifier.

A method aspect is therefore directed to a method of operating a server to act as a secure intermediary between a point of sale (POS) device and a wireless communications device, the secure intermediary associating a unique POS identifier with the POS device and a unique wireless communications device identifier with the wireless communications device. The method may include receiving the unique POS identifier and account access information from the wireless device, using a processor in cooperation with a network interface. The method may further include sending the account access information to the POS device using the unique POS identifier, so that the POS device causes a transfer of funds from a payment account associated with the account access information to a merchant account associated with the POS device, using the processor in cooperation with the network interface.

Other aspects are directed to a payment processor system that may comprise a wireless network, a relay network, and a point of sale (POS) device having associated therewith a merchant account and a coded image including a first relay network address of the POS device. The payment processor system may also include a mobile wireless communications device, which may have an image sensor and a processor coupled thereto. The processor may be configured to determine the first relay network address of the POS device based upon the coded image, and send the first relay network address of the POS device and account access information for a payment account to the relay network via the wireless network.

In addition, the relay network may be configured to send the account access information to the POS device based upon the first relay network address. Further, the POS device may also be configured to cause a transfer of funds from the payment account to the merchant account associated with the POS device, based upon the account access information. This payment processing system advantageously allows payment transactions to be processed in a quick and secure manner.

In some applications, the POS device may comprise a display, and the POS device may be configured to present the coded image via the display. Additionally or alternatively, a substrate may be carried by the POS device and may have the coded image thereon. Further, the mobile wireless communications device may have an input device, and the processor may be configured to permit selection of the payment account via the input device.

The mobile wireless communications device may have associated therewith a wireless network address and a second relay network address. The POS device may also be configured to send a transaction confirmation to the relay network after effectuating the transfer of funds from the payment account to the merchant account, and the relay network may be configured to determine the wireless network address of the mobile wireless communications device based upon the second relay network address, and to send the transaction confirmation to the mobile wireless communications device based upon the wireless network address.

The POS device may be configured to send payment information to the relay network. The relay network may be configured to determine the wireless network address of the mobile wireless communications device based upon the second relay network address, and to send the payment information to the mobile wireless communications device based upon the wireless network address.

The processor of the mobile wireless communications device may be further configured to accept a payment authorization and to send the payment authorization to the relay network via the wireless network. In addition, the relay network may be configured to send the payment authorization to the POS device based upon the first relay network address, and the POS device may be configured to cause the transfer of funds also based upon the payment authorization.

The payment processor system may include a credit server, and the POS device may also be configured to cause a transfer of funds from the payment account to the merchant account by sending the account access information and the payment authorization to the credit server. The POS device may send the account access information and the payment authorization to the credit server via a virtual private network (VPN). Additionally or alternatively, the credit server may have a third relay network address associated therewith, and the POS device may send the account access information and the payment authorization thereto via the relay network and based upon the third relay network address.

A method aspect is directed to a method of operating a payment processor system comprising a wireless network, a relay network, a point of sale (POS) device having associated therewith a merchant account and a coded image including a first relay network address of the POS device, and a mobile wireless communications device comprising a processor coupled to an image sensor. The method may include determining the first relay network address of the POS device based upon the coded image, using the processor in cooperation with the image sensor, and sending the first relay network address of the POS device and account access information for a payment account to the relay network via the wireless network, using the processor. The method may further include sending the account access information to the POS device based upon the first relay network address, using the relay network, and causing a transfer of funds from the payment account to the merchant account associated with the POS device, based upon the account access information, using the POS device.

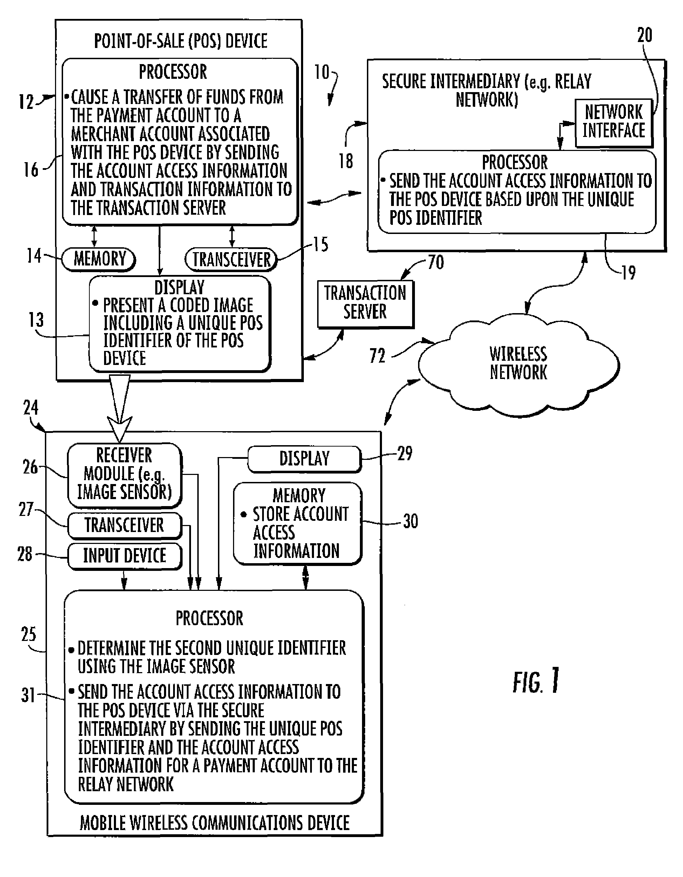

With reference to FIG. **1****,** a payment processor system **10** is now described. The payment processor system **10** includes a point-of-sale (POS) device **12,** wireless network **72,** secure intermediary (e.g. a relay network) **18,** and mobile wireless communications device **24.** The wireless network **72** may be a cellular network enabling data communications, for example.

The relay network **18** facilitates secure and encrypted communications between the various components of the payment processor system **10,** as will be appreciate by those of skill in the art. Devices, such as the mobile wireless communications device **24** that communicate on the wireless network **72** each have a wireless network address, which is referred to as an international mobile equipment identifier (IMEI) on some cellular networks. While the mobile wireless communications device **24** may encrypt data before sending the data to a recipient over the wireless network **72,** and recipient devices may decrypt the data upon receipt, the wireless network itself may be inherently unsecure. To add security to the payment processor system **10,** communications between the mobile wireless communications device **24** and POS device **12,** for example, may be routed through the relay network **18.** Each device with which the relay network **18** communicates may have a unique identifier or relay network address, which may be referred to as a personal identification number (PIN).

When a device on the wireless network **72,** such as the POS device **12,** is to send a message or item of data to another device on the wireless network, such as the mobile wireless communications device **24,** the POS device **12** sends the message to the relay network **18** via the wireless network or via a wired network. Included with the message is the unique identifier of the recipient of the message. The relay network **18** may then determine the wireless network address (or wide area network address) of the recipient based upon the unique identifier of the recipient (for example, by using a lookup table), and send the message to the recipient at that wireless network address.

The relay network **18** is secure and under the control of a secure entity, and therefore message and data transmission thereover is secure. By having the relay network **18** route messages and data between the mobile wireless communications device **24** and POS device **12,** those devices receive messages and data from a secure source (the relay network **18),** as opposed to receiving messages and data from another device on the wireless network **72,** which may not be secure. Therefore, the relay network **18** increases the security of the payment processing system **10.**

The POS device **12** includes a processor **16** coupled to a display **13,** memory **14,** and transceiver **15.** The transceiver **15** may provide the POS device **12** with connectivity to a wide area network, such as the Internet, through which the POS device **12** can communicate with a transaction server for effectuating transactions, as will be explained in detail below.

The POS device **12** has a relay network address (hereinafter referred to as a unique POS identifier) associated therewith. This unique POS identifier may be static and unchanging in some applications. The processor **16** is configured to display, on the display **13,** a coded image including the unique POS identifier. The coded image may be a barcode, QR code, or any suitable coded image capable of encoding the unique POS identifier.

Example mobile wireless communications devices **24** may include portable or personal media players (e.g., music or MP3 players, video players, etc.), remote controls (e.g., television or stereo remotes, etc.), portable gaming devices, portable or mobile telephones, smartphones, tablet computers, etc. The mobile wireless communications device **24** includes a housing **25** carrying an image sensor **26,** transceiver **27,** input device **28,** display **29,** memory **30,** and processor **31.** The processor **31** is coupled to the image sensor **26,** transceiver **27,** input device **28,** display **29,** and memory **30.**

The input device **28** may be a keyboard, touch sensitive pad, trackball, thumbwheel, button, microphone, or other suitable device, for example. It should be appreciated that in some applications, the display **29** may be a touch sensitive display, and may therefore serve as the input device **28.** The image sensor **26** may be a CMOS image sensor, for example. In addition, the transceiver **27** may be a cellular transceiver, and may be configured to perform both voice and data cellular communications.

The memory **30** may include volatile and nonvolatile portions, and is configured to store access information for a purchaser account associated with the mobile wireless communications device **24.** The purchaser account may be a credit card account, bank account, gift card account, or other suitable account.

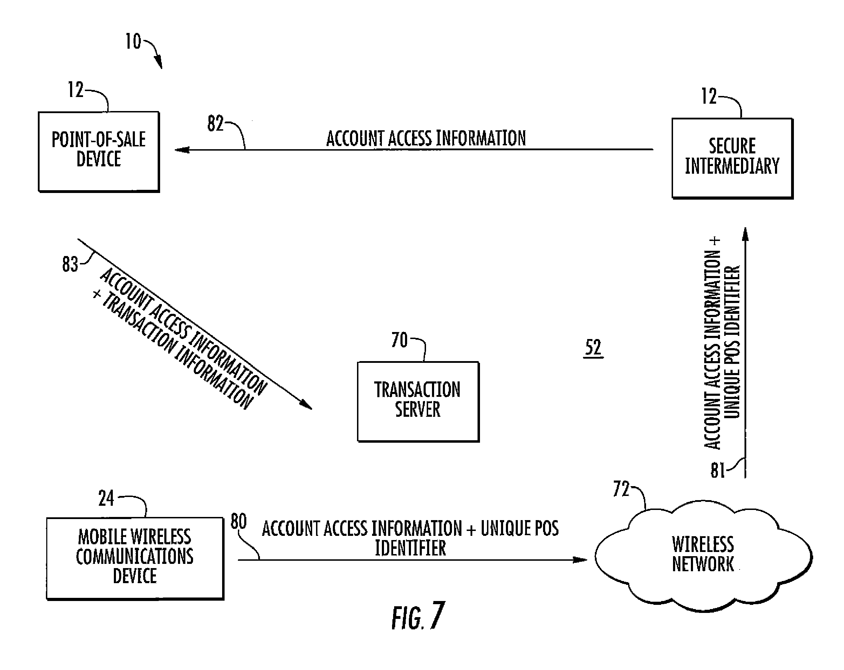

With further reference to FIG. 7, the operation of the payment processor system 10 is now described. The processor **31** of the mobile wireless communications device **24** is configured to determine the unique POS identifier of the POS device **12** based upon the coded image, using the image sensor **26.** The processor **31** does this by sensing the coded image using the image sensor **26,** and then decoding the coded image to thereby determine the unique POS identifier.

Once the processor **31** has determined the unique POS identifier, the processor **31** sends the unique POS identifier, together with the account access information to the POS device **12** via the relay network **18.** The processor **31** cooperates with the transceiver 27 to send the unique POS identifier and account access information to the wireless network **72** (Arrow **80).** The wireless network **72** in turn sends the unique POS identifier and account access information to the relay network **18** (Arrow **81).** The relay network **18** then sends the account access information to the POS device **12** using the unique POS identifier (Arrow **82).** The relay network **18** may send the access information to the POS device **12** via a direct connection, or via a network connection, such as the internet or the wireless network **72,** as will be appreciated by those of skill in the art. If the relay network **18** is to send the access information to the POS device **12** via a network, the relay network **18** first determines a network address of the POS device based upon the unique POS identifier, and then sends the access information to the POS device **12** using the network address. Determining the network address may be performed through the use of a look-up table, for example.

Since the POS device **12** now has the account access information, the processor **16** thereof causes a transfer of funds from the payment account to a merchant account associated with the POS device, based upon the account access information. The processor **16** does this by sending the account access information together with transaction information (e.g. the amount of the transaction, etc) to a transaction server (e.g. a credit server) **70** (Arrow **83).** The transaction server **70** then transfers the appropriate funds from the payment account to a merchant account. The POS device **12** may send the account access information and the transaction information to the transaction server in a secure fashion, utilizing encryption such as SSL, or over a virtual private network (VPN).

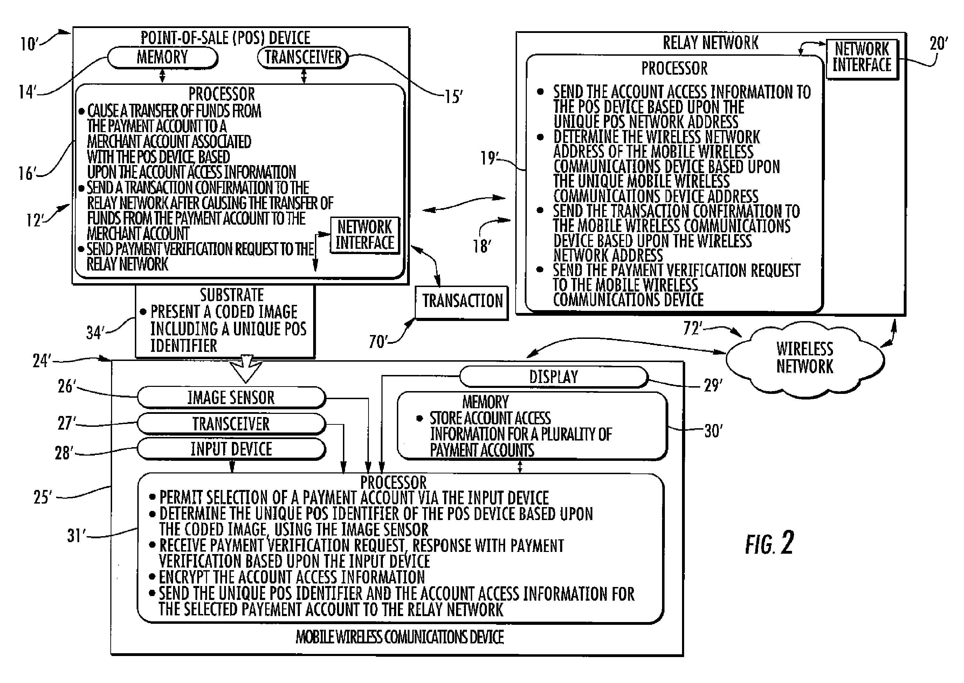

In the embodiment of the payment processor system **10'** shown in FIG. 2, a substrate **34',** such as a sticker, sign, or placard, is associated with the POS device **16'.** For example, the substrate **34'** may be a sticker affixed to the POS device **16'.** The substrate 34' presents the coded image which encodes the unique POS identifier of the POS device **16'.**

In addition, the memory **30'** of the mobile wireless communications device **24'** is configured to store access information for a plurality of payment accounts. The processor **31'** is configured to permit selection of a payment account from the plurality thereof via the input device **28'.** The processor **31'** then determines the unique POS identifier, as described above, using the image sensor.

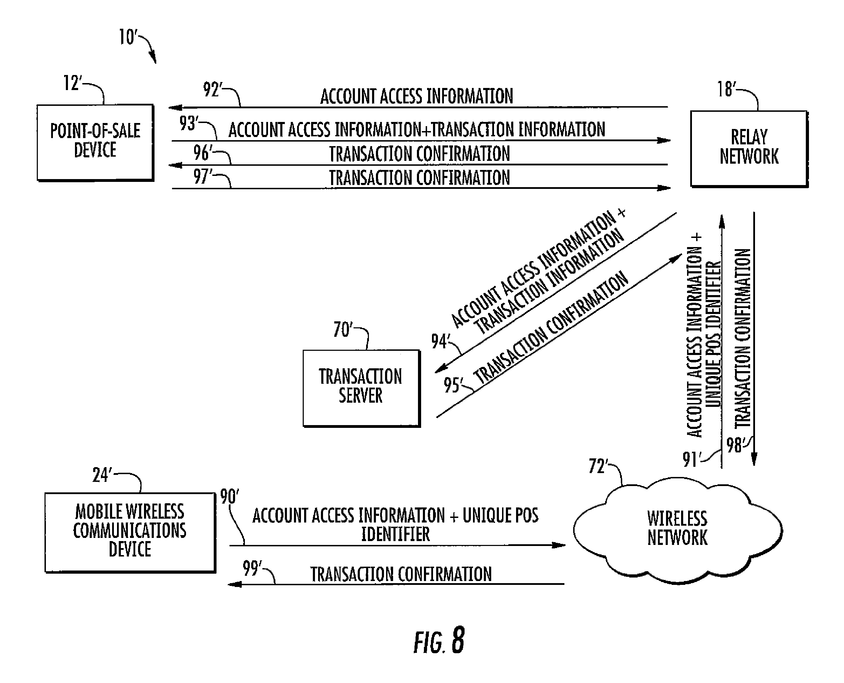

With additional reference to FIG. 8, the operation of the payment processor system **10'** will now be explained. Once the processor **31'** determines the unique POS identifier of the POS device **12',** the processor **31'** sends the unique POS identifier together with the access information for the selected payment account to the wireless network **72'** (Arrow **90').** The wireless network **72'** in turn sends the account access information and the unique POS identifier to the relay network **18'** (Arrow **91'),** as described above. The relay network then sends the account access information to the POS device **12'** (Arrow 92'), either directly or indirectly.

The POS device 12' then sends the account access information together with transaction information to the transaction server **70',** via the relay network **18'.** Therefore, the POS device **12'** sends the account access information and transaction information to the relay network **18'** (Arrow **93'),** which in turn sends the account access information and transaction information to the transaction server **70'** (Arrow **94').** Here, the transaction server **70'** may have a unique transaction server identifier associated therewith, and the POS device **12'** may send the account access information and transaction information thereto, through the relay network **18',** using the unique transaction server identifier. The relay network **18'** may send the account access information and transaction information to the transaction server **70'** either directly, or indirectly through a network.

In the case that the relay network **18'** sends the account access information and transaction information indirectly, the transaction server may have a second network address associated therewith, and the relay network may determine the second network address based upon the unique transaction server identifier, and send the account access information and transaction information to the transaction server **70'** using the second network address.

The transaction server **70'** causes the transfer of funds from the purchaser account to the merchant account, generates a transaction confirmation indicating that the transaction was successfully processed, and sends the transaction confirmation to the POS device **12'** via the relay network **18'.** To accomplish this, the transaction server **70'** sends the transaction confirmation to the relay network **18'** (Arrow **95'),** and the relay network **18'** in turn sends the transaction confirmation to the POS device **12'** (Arrow **96'**).

The POS device **12'** then sends the transaction confirmation to the mobile wireless communications device **24'** via the relay network **18'** and wireless network **72'.** Therefore, the POS device **12'** sends the transaction confirmation first to the relay network **18'** (Arrow **97'**), which in turn sends the transaction confirmation to the wireless network **72'** (Arrow **98').** The wireless network **72'** thereafter sends the transaction confirmation to the mobile wireless communications device **24'** (Arrow **99').** The processor **31'** of the mobile wireless communications device **24'** may then display the transaction confirmation on the display **29'.**

Those portions of the POS device **12',** relay network **18',** and mobile wireless communications device **24'** not specifically described are similar to those of the payment processor system **10** described above with reference to FIG. 1 and need no further description herein.

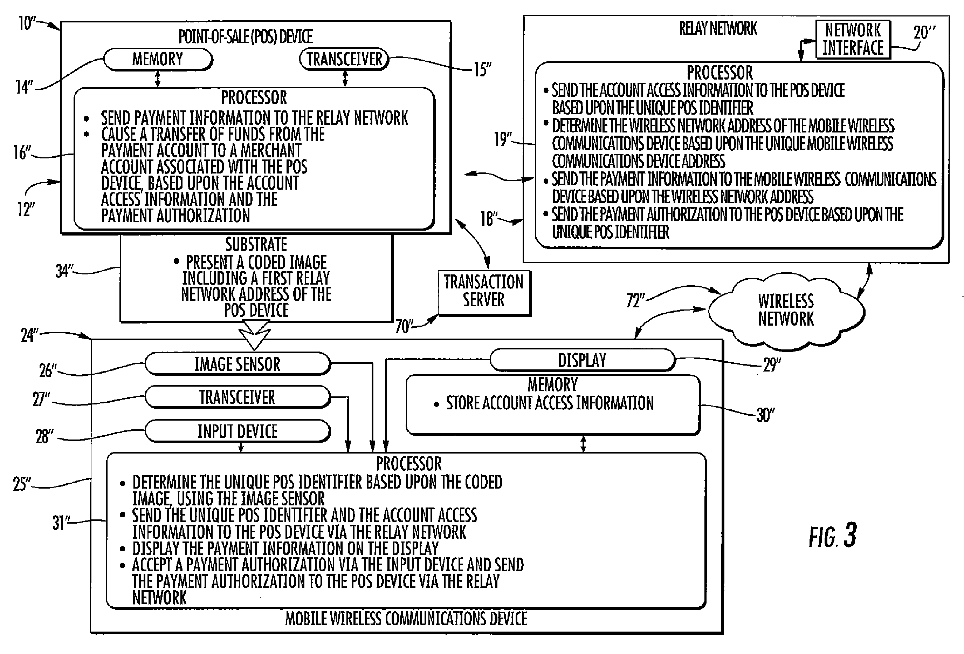

A further embodiment of the payment processor system **10"** is now described with reference to FIG. 3. Here, the POS device **12",** relay network **18",** mobile wireless communications device **24",** and substrate **34"** function similar to those described above with reference to FIGS. 1-2. Reading and determination of the unique POS identifier of the POS device **12"** are discussed above with reference to the payment processor system of FIG. 2. Operation of the payment processor system **12"** proceeds differently than that of the payment processor system of FIG. 2, and is described herein below.

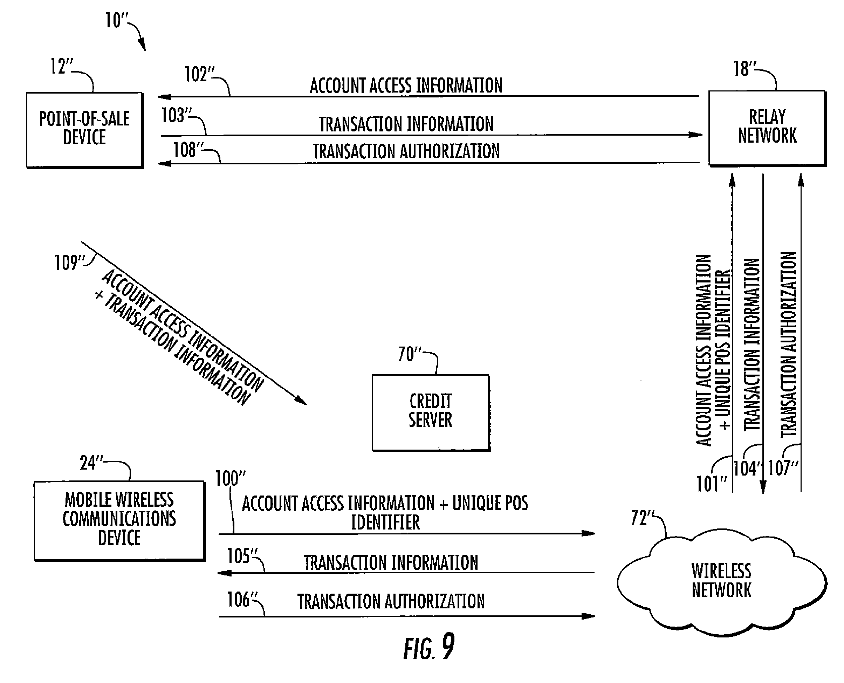

With additional reference to FIG. 9, operation of the payment processor system **10"** is now described. The account access information and the unique POS identifier are sent by the mobile wireless communications device **24"** to the wireless network **72"** (Arrow 100"), which in turn sends the account access information and the unique POS identifier to the relay network **18"** (Arrow **101"**). The relay network **18"** then sends the account access information to the POS device **12"** (Arrow **102"**) as described above.

The POS device **12"** then sends the transaction information back to the mobile wireless communications device **24"** via the relay network **18".** Therefore, the POS device **12"** sends the transaction information to the relay network **18"** (Arrow **103"**), which in turn sends the transaction information to the wireless network **72"** (Block **104"**). The wireless network then sends the transaction information to the mobile wireless communications device **24"** (Arrow **105"**). As will be appreciated by those of skill in the art, this payment information may include a variety of information about the transaction, possibly including a price for each item or service to be purchased, a subtotal for all items or services to be purchased, a sales tax amount for the subtotal, and even a total purchase amount.

The processor **31"** of the mobile wireless communications device **24"** may then present the payment information on the display **29".** The processor **31"** may accept a payment authorization via the input device **28"** and send the payment authorization to the relay network **18".** This payment authorization represents a user authorization of the transaction. This feature therefore allows a user to see the payment information before deciding whether or not to authorize the transfer of funds. In some applications, the processor **31"** may even allow the addition of an additional amount to the transaction (e.g. a tip or gratuity), and this additional amount may be part of the payment authorization sent to the relay network **18".**

The mobile wireless communications device **24"** then sends the transaction authorization back to the POS device **12"** by sending the transaction authorization to the wireless network **72"** (Arrow **106"**), which in turn sends the transaction authorization to the relay network (Arrow **107"**), which then sends the transaction authorization to the POS device (Arrow **108").** After receiving the transaction authorization, the POS device **12"** may update the transaction information (e.g. adding a tip or gratuity), and sends the account access information together with the transaction information to the transaction server **70"** (Arrow **109").** The transaction server **70"** processes the transaction.

It should be understood that although the different embodiments of the payment processing systems **10, 10', 10"** described above may have different features, the present disclosure envisions payment processing systems having these features combined in any fashion. Therefore, the embodiments described herein should not be construed as limiting.

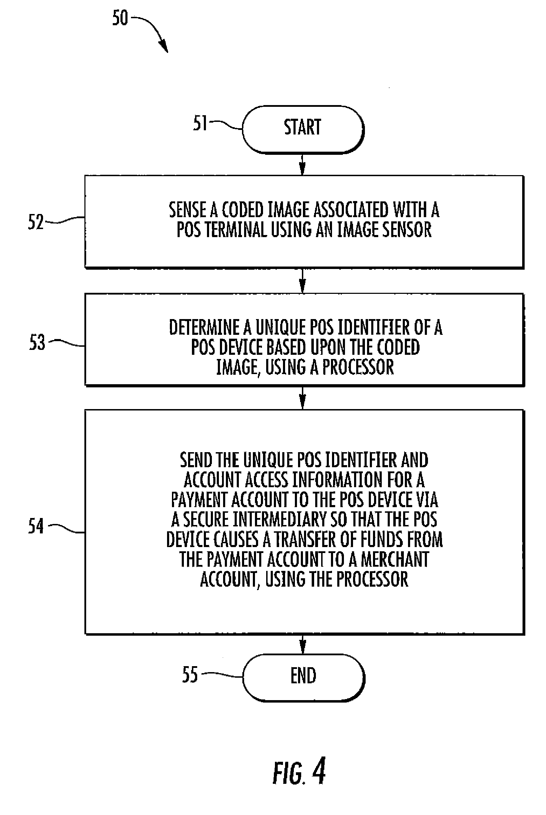

A method of operating the mobile wireless communications devices described above is now described with reference to the flowchart **50** of FIG. 4. After the start (Block **51),** a coded image associated with a POS terminal is sensed using an image sensor (Block **52).** Next, a unique POS identifier of the POS device is determined based upon the coded image, using a processor (Block **53).** The unique POS identifier is then sent, together with account access information for a payment account, to the POS via a secure intermediary so that the POS device causes a transfer of funds from the payment account to a merchant account, using the processor (Block **54).** Block **55** indicates the end of the method.

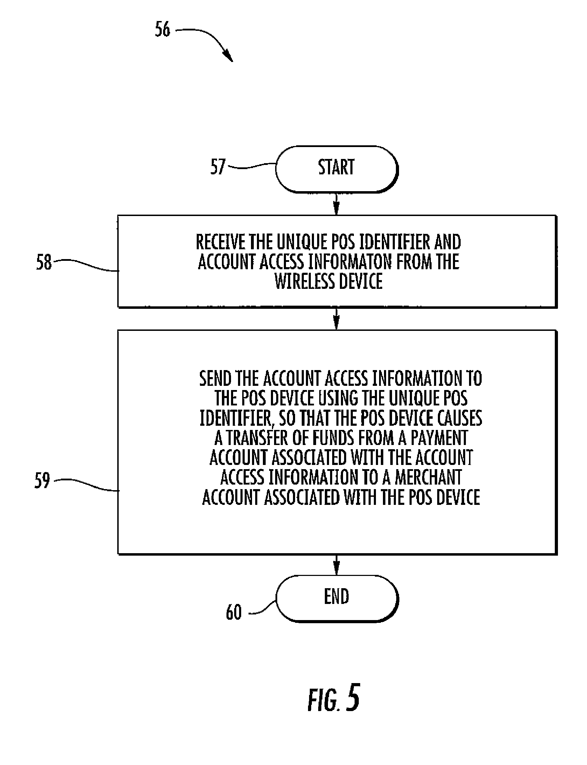

A method of operating the secure intermediary described above is now described with reference to flowchart **56** of FIG. 5. After the start (Block **57),** the unique POS identifier is received together with account access information from the wireless device (Block **58**). The account access information is then sent to the POS device using the unique POS identifier, so that the POS device causes a transfer of funds from a payment account associated with the account access information to a merchant account associated with the POS device (Block **59).** Block **60** indicates the end of the method.

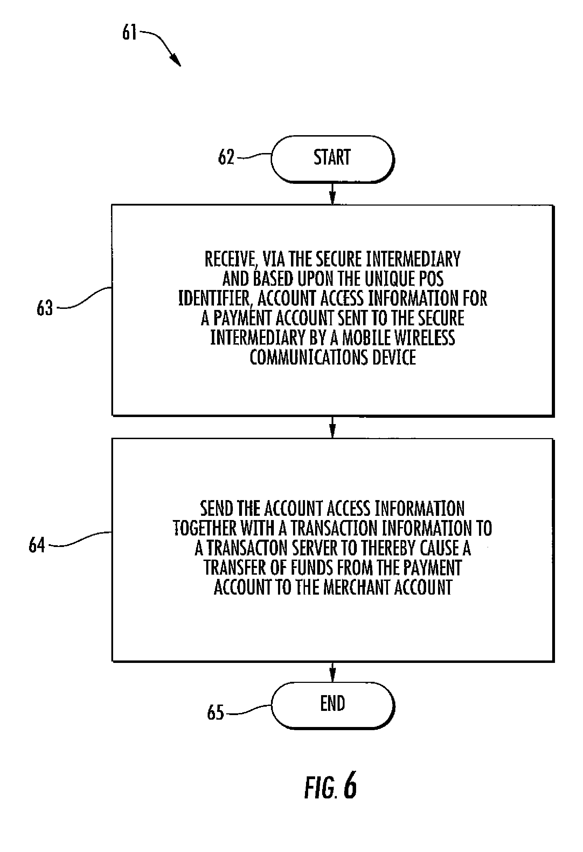

A method of operating the POS device discussed above is now described with reference to flowchart **61** of FIG. 6. After the start (Block **62),** account access information for a secure payment account sent to the secure intermediary by a mobile wireless communications device is received based upon the unique POS identifier (Block **63).** Thereafter, the account access information and transaction information are sent to a transaction server to thereby cause a transfer of funds from the payment account to a merchant account (Block **64).** Block **65** indicates the end of the method.

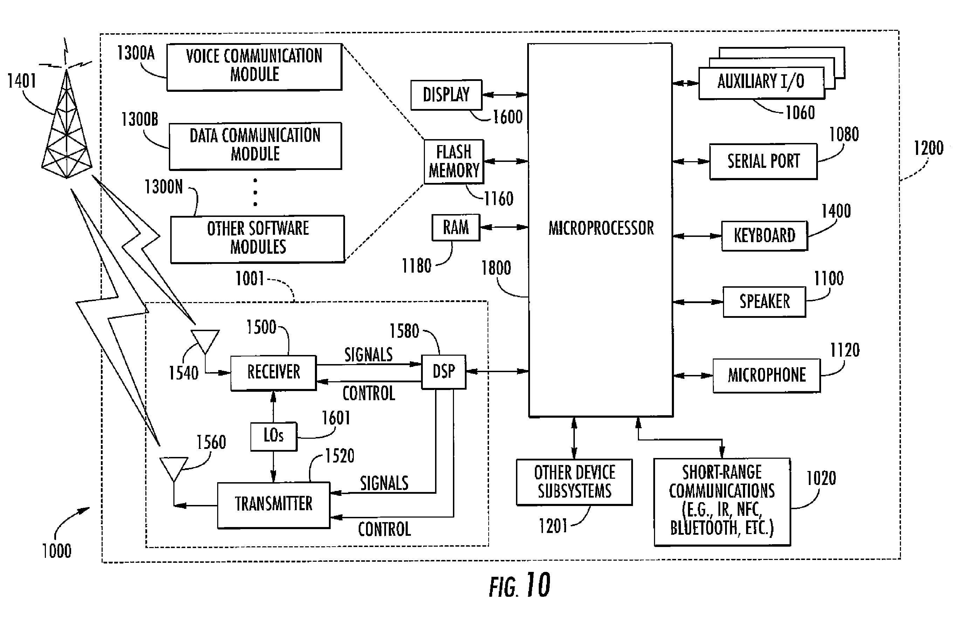

Example components of a mobile wireless communications device **1000** that may be used in accordance with the above-described embodiments are further described below with reference to FIG. 10. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display 1600. The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 10. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device 1000 may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM 1180.

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device 1000 during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A wireless communications device (24) for communication with a point of sale (POS) device (12) via a secure intermediary (18), the secure intermediary associating a unique POS identifier with the POS device, the POS device having a merchant account associated therewith, the wireless communications device comprising:
a receiver module (26);
a memory (30) configured to store account access information for a payment account; and
a processor (31) coupled to the receiver module and the memory, the processor configured to
determine the unique POS identifier using said receiver module, and
send the account access information to the POS device via the secure intermediary using the unique POS identifier, the POS device operable to request transfer of funds from the payment account to the merchant account using the account access information.

2. The wireless communications device (24) of Claim 1, wherein said receiver module (26) comprises an image sensor; wherein the unique POS identifier is encoded in a coded image; and wherein said processor (31) determines the unique POS identifier by capturing the coded image using said image sensor and decoding the coded image to thereby determine the unique POS identifier.

3. The wireless communications device (24') of Claim 1, wherein said processor (31') is configured to encrypt the account access information before sending the account access information to the POS device (12'), and the POS device sends the account access information to a transaction server (70') to thereby cause the transfer of funds.

4. The wireless communications device (24') of Claim 1, wherein said memory (30') is configured to store account access information for a plurality of payment accounts and said processor is configured to permit selection of the payment account.

5. The wireless communications device (24") of Claim 1, further comprising a display (29"); wherein said processor is configured to receive a payment confirmation from the POS device (12") via the secure intermediary and said processor (31") is configured to display the payment confirmation on said display.

6. The wireless communications device (24') of Claim 1, wherein said processor (31') is configured to receive a payment verification request from the POS device (12') via the secure intermediary (18') and said processor is configured to send a payment verification to the POS device (12') via the secure intermediary using the unique POS address.

7. A method of operating a wireless communications device (24) for communication with a point of sale (POS) device (12) via a secure intermediary (18), the secure intermediary associating a unique POS identifier with the POS device, the POS device having a merchant account associated therewith, the wireless communications device comprising a receiver module (26), a memory (30) configured to store account access information for a payment account, and a processor (31) coupled to the receiver module and the memory, the method comprising:
determining the unique POS identifier using the receiver module in cooperation with the processor; and
sending the account access information to the POS device via the secure intermediary using the unique POS identifier, the POS device operable to request a transfer of funds from the payment account to the merchant account.

8. The method of Claim 7, further comprising encrypting the account access information before sending the account access information to the POS device (12'), the POS device sending the account access information to a transaction server (70') to thereby cause the transfer of funds.

9. The method of Claim 7, wherein the memory (30') is configured to store account access information for a plurality of payment accounts; and the method further comprises permitting selection of the payment account via an input device (28').

10. The method of Claim 7, further comprising receiving a payment confirmation from the POS device (12') via the secure intermediary and displaying the payment confirmation on a display (29').

11. A server (18) configured to operate as a secure intermediary between a point of sale (POS) device (12) and a wireless communications device (24), the secure intermediary associating a unique POS identifier with the POS device and a unique wireless communications device identifier with the wireless communications device, the server comprising:
a network interface (20);
a processor (19) coupled to said network interface and configured to:
receive the unique POS identifier and account access information from the wireless device, and
send the account access information to the POS device using the unique POS identifier, the POS device operable to request a transfer of funds from a payment account associated with the account access information to a merchant account associated with the POS device.

12. The server (18') of Claim 11, wherein said processor (19') is configured to receive a transaction confirmation from the POS device (12') and send the transaction confirmation to the wireless communications device (24') using the unique wireless communications device identifier.

13. The server (18') of Claim 11, wherein said processor (19') is configured to receive a transaction verification request from the POS device (10') and send the transaction verification request to the wireless communications device (24') using the unique wireless communications device identifier; and wherein said processor is further configured to receive a transaction verification from the wireless communications device and send the transaction verification to the POS device using the unique POS identifier.

## Amended claims

### Amended claims in accordance with Rule 137(2) EPC.

**1.** A wireless communications device (24) for communication with a point of sale (POS) device (12) via a secure intermediary (18), the secure intermediary associating a unique POS identifier with the POS device, the POS device having a merchant account associated therewith, the wireless communications device comprising:
a receiver module (26);
a memory (30) configured to store account access information for accessing a payment account; and
a processor (31) coupled to the receiver module and the memory, the processor configured to
determine the unique POS identifier using said receiver module, and
send the account access information to the POS device via the secure intermediary using the unique POS identifier, the POS device operable to request transfer of funds from the payment account to the merchant account using the account access information.

**2.** The wireless communications device (24) of Claim 1, wherein said receiver module (26) comprises an image sensor; wherein the unique POS identifier is encoded in a coded image; and wherein said processor (31) determines the unique POS identifier by capturing the coded image using said image sensor and decoding the coded image to thereby determine the unique POS identifier.

**3.** The wireless communications device (24') of Claim 1, wherein said processor (31') is configured to encrypt the account access information before sending the account access information to the POS device (12'), and the POS device sends the account access information to a transaction server (70') to thereby cause the transfer of funds.

**4.** The wireless communications device (24') of Claim 1, wherein said memory (30') is configured to store account access information for a plurality of payment accounts and said processor is configured to permit selection of the payment account.

**5.** The wireless communications device (24") of Claim 1, further comprising a display (29"); wherein said processor is configured to receive a payment confirmation from the POS device (12") via the secure intermediary and said processor (31") is configured to display the payment confirmation on said display.

**6.** The wireless communications device (24') of Claim 1, wherein said processor (31') is configured to receive a payment verification request from the POS device (12') via the secure intermediary (18') and said processor is configured to send a payment verification to the POS device (12') via the secure intermediary using the unique POS address.

**7.** A method of operating a wireless communications device (24) for communication with a point of sale (POS) device (12) via a secure intermediary (18), the secure intermediary associating a unique POS identifier with the POS device, the POS device having a merchant account associated therewith, the wireless communications device comprising a receiver module (26), a memory (30) configured to store account access information for accessing a payment account, and a processor (31) coupled to the receiver module and the memory, the method comprising:
determining the unique POS identifier using the receiver module in cooperation with the processor; and
sending the account access information to the POS device via the secure intermediary using the unique POS identifier, the POS device operable to request a transfer of funds from the payment account to the merchant account.

**8.** The method of Claim 7, further comprising encrypting the account access information before sending the account access information to the POS device (12'), the POS device sending the account access information to a transaction server (70') to thereby cause the transfer of funds.

**9.** The method of Claim 7, wherein the memory (30') is configured to store account access information for a plurality of payment accounts; and the method further comprises permitting selection of the payment account via an input device (28').

**10.** The method of Claim 7, further comprising receiving a payment confirmation from the POS device (12') via the secure intermediary and displaying the payment confirmation on a display (29').

**11.** A server (18) configured to operate as a secure intermediary between a point of sale (POS) device (12) and a wireless communications device (24), the secure intermediary associating a unique POS identifier with the POS device and a unique wireless communications device identifier with the wireless communications device, the server comprising:
a network interface (20);
a processor (19) coupled to said network interface and configured to:
receive the unique POS identifier and account access information for accessing a payment account from the wireless device, and
send the account access information to the POS device using the unique POS identifier, the POS device operable to request a transfer of funds from a the payment account associated with the account access information to a merchant account associated with the POS device.

**12.** The server (18') of Claim 11, wherein said processor (19') is configured to receive a transaction confirmation from the POS device (12') and send the transaction confirmation to the wireless communications device (24') using the unique wireless communications device identifier.

**13.** The server (18') of Claim 11, wherein said processor (19') is configured to receive a transaction verification request from the POS device (10') and send the transaction verification request to the wireless communications device (24') using the unique wireless communications device identifier; and wherein said processor is further configured to receive a transaction verification from the wireless communications device and send the transaction verification to the POS device using the unique POS identifier.
